# EUROPEAN PATENT SPECIFICATION

(11) **EP 2 409 563 B1**
(45) Date of publication and mention of the grant of the patent: **20.03.2013**
(21) Application number: 11175023.8
(22) Date of filing: 22.07.2011
(51) Int. Cl.: A01F 29/10

(54) **In-feed apparatus for a forage harvester**
Zuführvorrichtung für einen Feldhäcksler
Appareil d'alimentation pour récolteuse-hacheuse

(30) Priority: 22.07.2010 BE 201000454
(43) Date of publication of application: 25.01.2012
(73) Proprietor: CNH Belgium N.V., 8210 Zedelgem (BE)
(72) Inventor: Ducoulombier, André S.N.C., 8560 Wevelgem (BE)
(74) Representative: CNH IP Department

(56) References cited:
- EP-A1- 0 872 171
- EP-A1- 1 342 403
- EP-A1- 1 872 649
- US-A- 3 985 306
- US-A- 4 821 494

## Description

### Field of the invention

The present invention relates generally to forage harvesters, and more particularly to an in-feed apparatus used for feeding crop material towards a rotating cutter head.

### Background of the invention

A forage harvester is usually equipped with a header that picks the crop up from the field and delivers it to the inlet of a front unit of the forage harvester. The front unit comprises an in-feed apparatus and a chopper for comminuting the crop, the latter being formed of a cutter head with knives and a stationary shear bar.

In order to achieve good chopping quality, i.e. comminution of the crop material to a constant chop length, an even mat of crop material has to be fed at a constant speed towards the cutter head. The chopped material subsequently passes into a blower unit with paddles, which throw it into up a discharge spout for collection in a cart or container.

Commonly, the mat of crop material is formed between stationary lower feed rolls and movable upper feed rolls, which are mounted for vertical displacement inside the front unit. The upper feed rolls are forced downwardly by a pair of springs for compression of the crop incoming material. A stop has to be provided to prevent interference of the upper and lower feed rolls when no material is being fed into the forage harvester and the upper rolls are in their lowermost position. Furthermore the shafts of the feed rolls which extend through apertures in the feed roll housing, must not contact the edges of the apertures, which would cause undue wear of the components. Hence a supporting rim below these shafts cannot be used for limiting the downward travel of the feed rollers.

It is known to provide abutments on the feeder frame below the bearing housings or gearboxes of the upper feed rolls for arresting the latter in a position suitably remote from the lower feed rolls. Such abutments may be equipped with rubber bumpers to cushion the downward motion of the feed rolls. Alternatively bumpers may be provided on the bearing housings or gearboxes.

In practice, the flat surfaces of the abutments have to be cleaned at regular intervals in order to preserve the original minimum distance between the upper and lower feed rolls. If this is not done, the accumulation of stray crop material and dirt on the abutments prevents the upper feed rolls from returning to their original lowermost position. Under these circumstances the feed rolls are no longer capable of providing a regular flow of crop material to the cutter head as soon as the flow rate decreases and the thickness of the mat between the feed rolls diminishes accordingly. Consequently the cutter head is loaded in an irregular manner and no constant chop length can be realized or maintained.

Alternative solutions to this problem of limiting the downward movement of the upper feed rolls are disclosed in EP 1 342 403 where a nut fitted to a guide rod passing through the spring biasing the upper feed rolls downward is used as a stop and in EP 1 872 649 which proposes a telescopic springs guide with a stop limiting the movement of the sections of the guide tube.

### Object of the invention

The present invention seeks to provide a less costly solution to the problem of limiting the upper feed rolls of an in-feed apparatus of a forage harvester which allows the position of the movable feed rolls closest to the stationary feed rolls to be positively defined by a stop which is not affected by an accumulation of dirt nor stray crop material.

### Summary of the invention

According to the present invention there is provided an in-feed apparatus for a forage harvester having upper and lower feed roller assemblies mounted in a frame, the upper feed roller assembly being movably mounted in the frame to vary the separation between the two assemblies and being biased towards the lower feed roller assembly so as to apply a compressive force to crop material passing between the upper and lower feed roller assemblies, the in-feed apparatus further including a stop for limiting downward movement of the upper roller assembly so as to set a minimum separation between the two feed roller assemblies, characterised in that the stop comprises a cable secured at one end to the upper roller assembly and at its other end to the frame.

The cable preferably is a wound metal cable formed of coiled wire strands.

The cable advantageously is of a fixed length, any required adjustment of the minimum separation between the two feed roller assemblies being achieved by varying the position of the mounting point of the cable on the frame and/or the upper feed roller assembly.

To avoid excessive strain on the cable, metal eyelets may be fitted to each end of the cable. The eyelets may be held in place in a conventional manner, such as by passing a loop of the cable around the eyelet and then crimping the free end of the cable

To avoid sideways kinking of the cables the eyelets may be mounted to the loose cables in the same plane.

### Brief description of the drawings

The invention will now be described further, by way of example, with reference to the accompanying drawings, in which:
Figure 1 is a side elevational view of a known forage harvester, comprising a front unit mounted to a main frame and a crop collecting apparatus;
Figure 2 is an enlarged side view of the front unit, comprising an upper and lower feed roller assembly, and a portion of the main frame;
Figure 3 is a front perspective view from one side of an upper feeder roller assembly of an in-feed apparatus according to the invention;
Figure 4 is a perspective view from the other side of the assembly shown in Figure 3; and
Figure 5 is a side view of the assembly of Figure 3.

### Detailed description of the preferred embodiment(s)

It is to be understood that, throughout this description, terms such as "front", "rear", "forward", "rearward", "upward", "downward", etc. are words of convenience and are not to be construed as limiting terms.

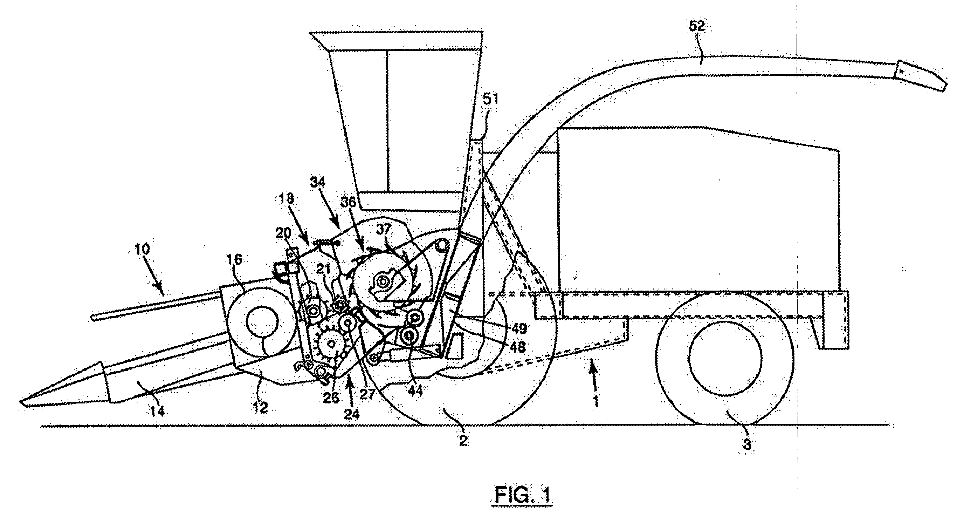

Figure 1 shows a forage harvester having a main frame 1 to which are mounted ground engaging traction wheels 2 and steering wheels 3. The forage harvester is shown equipped with a crop collecting apparatus, in the form of a row crop attachment 10, suitable for the harvesting of corn, but which can be replaced with a conventional windrow pick-up device or a conventional cutter bar attachment, depending on the type of crop to be harvested. Customarily, the row crop attachment 10 comprises an attachment frame 12, which supports a plurality of row crop units 14, operable to harvest corn stalks from the field and to convey the same rearwardly to an auger 16 which in its turn delivers the crop material to the bite of an in-feed apparatus installed in a front unit of the forage harvester.

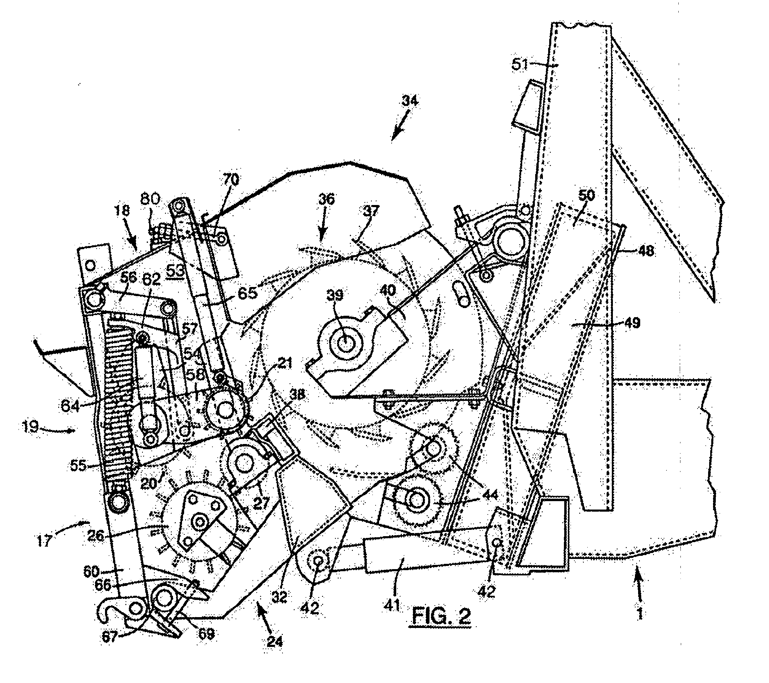

As shown in Figure 2, the in-feed apparatus comprises a lower feed roller assembly 17, constituted by a front lower feed roller 26, and a smooth, rear lower feed roller 27, and an upper feed roller assembly 19, constituted by a front upper feed roller 20 and a rear upper feed roller 21. The lower feed rollers 26, 27 are rotatably mounted in a lower feeder frame 24 welded to a transverse beam 32 of a cutter head frame 34, and the upper feed rollers 20, 21 are mounted in an upper feeder frame 18, to which the row crop attachment 10 is secured.

The feed rollers 20, 21, 26, 27 rotate to convey the crop material along a crop feeding path defined between the lower and upper feed roller assemblies 17, 19 to a cutter head 36 which comprises a plurality of knives 37, generating a cylindrical peripheral shape or profile when the cutter head 36 is rotated about its axle 39. The knives 37 cooperate with a fixed shear bar 38 to cut the crop material to length and project it into the bite of a set of counter-rotating crop processor rolls 44, which crack any kernels which may be left in the chopped material and deliver the whole to a blower rotor 49 which is installed within a blower housing 48, attached to vertical beams 51 of the main frame 1. The blower rotor 49 comprises a plurality of paddles 50, which throw the material upwardly through the blower outlet into a discharge spout 52 (Figure 1), which can be positioned by an operator to direct the cut crop material as required, normally into a wagon which is moving alongside or behind the forage harvester.

The cutter head axle 39 is journalled on a pair of cutter head supports 40 of a generally triangular shape, attached to the vertical frame beams 51. The cutter head frame assembly, comprising the cutter head frame 34, the lower feeder frame 24 and the upper feeder frame 18, are mounted for pivotal movement about the same axle 39. The position of this assembly relative to the main frame 1 is controlled by a pair of hydraulic cylinders 41, which are mounted by means of pins 42 between the transverse beam 32 of the cutter head frame 34 and the main frame 1.

The upper feeder frame 18 comprises left and right hand side plates 53, each having two substantially vertical apertures 54 through which extend the shafts of the upper feed rollers 20, 21. The outer ends of said shafts are received in bearing housings 58, which are movably linked to the upper feeder frame 18 by left and right hand sets of crank arms 56 and load arms 57. The crank arms 56 are mounted for pivotal movement to a front portion 60 of the upper feeder frame 18, which registers with the outlet of the row crop attachment 10. The rear end of each arm 56 is pivotally linked to the load arm 57, the lower end of which is pivotally mounted to the bearing housing 58.

Each load arm 57 comprises a forwardly extending member 62 to which is mounted the upper end of a helical spring 55, the lower end of which is pivotally mounted to the sides of the front portion 60 of the upper feed roller frame 18. The springs 55 force the load arms 57, the bearing housings 58 and the upper feed rollers 20, 21 downwardly to the crop feeding path and rearwardly to the cutter head 36.

A first motion damper 64 is installed between the front portion of the bearing housing 58, in the vicinity of the front upper feed roller 20, and the forwardly extending member 62 of the load arm 57. A further damper 65 is mounted between the rear portion of the bearing housing 58, in the vicinity of the rear upper feed roller 21, and a stud welded to the top of the upper feeder frame 18. Both dampers 64, 65 may be hydraulic shock absorbers having distinct damping characteristics when elongated or when shortened.

The lower end of the front portion 60 comprises a pair of bifurcated extensions 66, fitting over a transverse cylindrical beam 67 of the lower feeder frame 24. The bifurcated extensions 66 are pivotally secured to the beam 67 by means of pins 69. The top of the upper feeder frame 18 is held against the cutter head frame 34 by a pair of eyebolts 70, attached to the sides of the latter frame 34.

The forage harvester shown in Figures 1 and 2 is known from EP 0 872 171 and its description has been included to provide a clearer understanding of the background of the present invention. For the present invention, it suffices to appreciate that the in-feed apparatus has an upper feed roller assembly with rollers 20 and 21, which is supported on a frame 18 and is urged downwards by springs towards the lower feed rollers 26 and 27.

Some form of stop is needed to limit the downward movement of the upper feed roller assembly when there is no crop passing through the in-feed apparatus. EP 0 872 171 suggests using the tension in a continuous belt driving the upper feed rollers to limit the movement. An alternative proposal has been to use a nut on a guide rod passing through spring 55, but this was disconcerting to the driver as the rods moved up and down as crop passed through the in-feed apparatus. A still further proposal was to use telescopically collapsible guide rods within the springs 55 and to provide stops to limit the maximum extension of the guide rods. The latter proposal proved too costly.

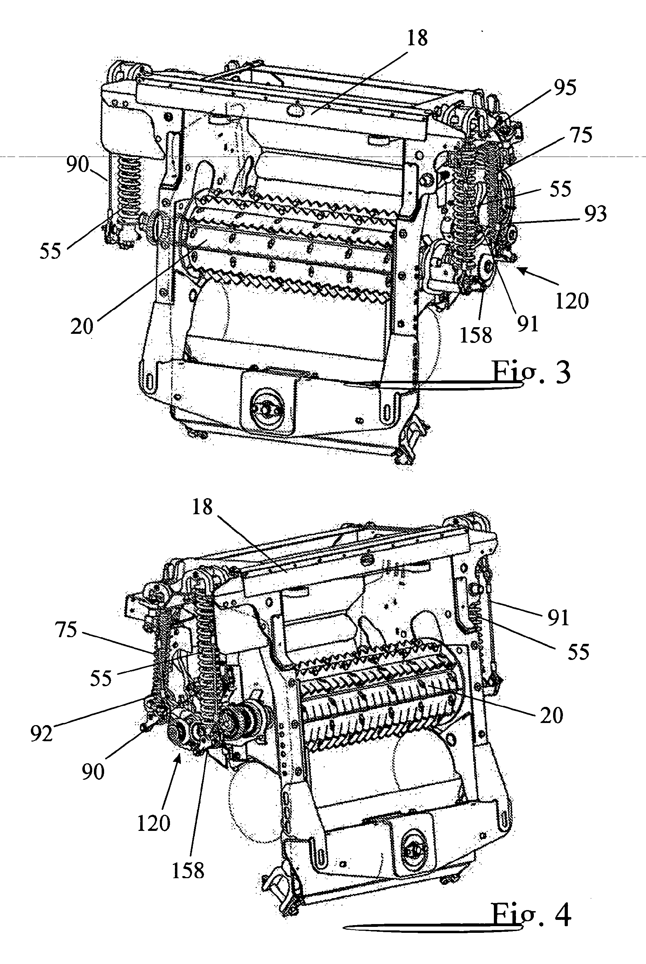

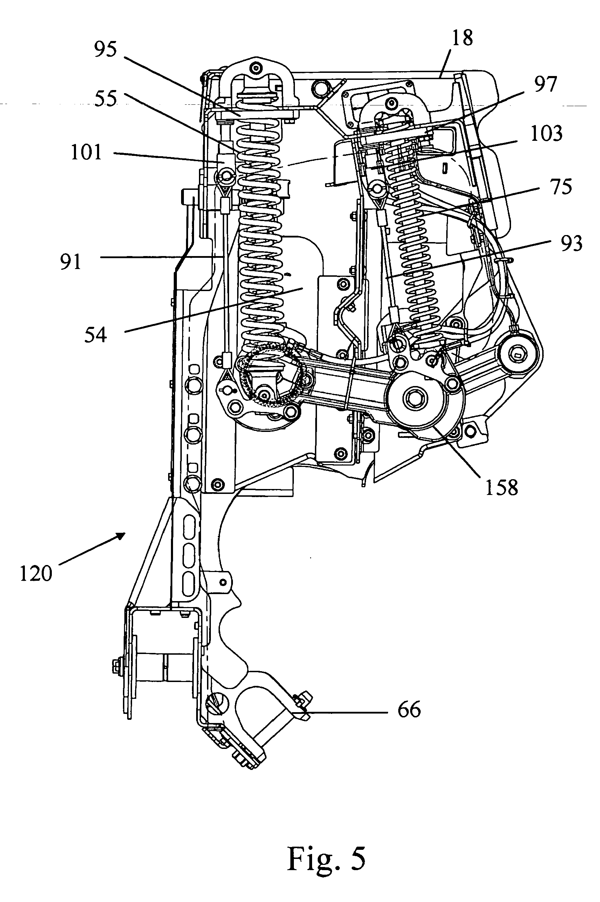

In Figures 3, 4 and 5, there is shown an in-feed of the present invention in which components serving the same function as already described with reference to Figure 1 and 2 have been allocated the same reference numerals and will not be described further.

The upper feed roller assembly, which is designated 120 in Figures 3 and 4, has two feed rollers of which only the front feed roller 20 can be seen in Figures 3 and 4, and a pair of bearing housings 158. The feed roller assembly 120 is mounted as before on a frame 18. The bearing housings 158 of the upper feeder rolls 20, 21 are urged downwards by springs 55 at their front ends and by supplementary helical springs 57 at their rear ends. In the present invention, the stops used to limit the downward movement of the upper feed roller assembly 120 comprise four cables 90, 91, 92 and 93. The cables 90 and 92 are connected to the front end of the feed roller assembly 120 and are the same length as one another. In the present embodiment they are mounted next to the front springs 55 and link the front ends of the bearing housings 158 to struts 95 extending from the sides of the uppper feeder frame 18. The cables 91 and 93 on the other hand, which are connected to the rear end of the feed roller assembly are also of the same length as one another, but are shorter than the cables 90 and 92. In the present embodiment the cables 91 and 93 are located next to the rear springs 75 and link the rear ends of the housings 158 to further struts 97 extending from the upper rear of the upper feeder frame 18. The same front and rear struts 95, 97 also hold the top of the front and rear springs 55, 57, respectively.

Each of the cables is formed of spirally metal wires, preferably of stainless steel. The cables are all of fixed length and fitted with metal eyelets. As best seen in Figure 4, the eyelets are tear drop shaped and retained on the cable by crimping the end of cable after having passed it around the eyelet.

Four cables are needed to ensure that the upper feed rollers rest at the correct height on both sides of the frame 18 and that the correct spacing is achieved between both the front feed rollers and the rear feed rollers.

To adjust the minimum gap between the feed roller assemblies, the ends of the cables may the fitted over hooks or secured to other retainers, e.g., by screws 101, 103, that are themselves adjustably mounted on the frame 18 of the upper feed roller assembly.

When no crop material is fed into the forage harvester, the position of the movable feed rollers 20, 21 is defined by the lengths of the stretched cables 90 to 93. When crop material is delivered thereto by the attachment 10, it will be compressed into an even mat under action of the springs 55, 75 and the feed rollers 20, 21. The latter are permitted to rise when the height of crop mat increases while the tension in the cables is slackened. If the eyelets are arranged in the same plane, parallel to the side walls of the upper feeder frame 18, the slack cables will not kink out of this plane and thus avoid interference with the components of the drive lines.

The vertical movement of the feed rollers 20, 21 is not hindered in any manner by possible pollution of the suspension structure caused by stray crop material. Accumulation of dirt thereon does not influence the stretching or slackening of the cables 90 to 93. Moreover, the space below the housings 158 is free of abutments or other surfaces on which crop material otherwise could accumulate and reduce the free vertical range of the rollers.

The use of cables to set the minimum gap between the feed roller assemblies may also be used in feeder units equipped with other types of conveyor means in replacement of the feed rollers.

## Claims

1. An in-feed apparatus for a forage harvester having upper and lower feed roller assemblies (120, 17) mounted in a frame,
the upper feed roller assembly (120) being movably mounted in the frame (18) to vary the separation between the two assemblies and being biased towards the lower feed roller assembly (17) so as to apply a compressive force to crop material passing between the upper and lower feed roller assemblies,
the in-feed apparatus further including a stop for limiting downward movement of the upper roller assembly so as to set a minimum separation between the two feed roller assemblies,
**characterised in that** the stop comprises a cable (90, 91, 92, 93) secured at one end to the upper roller assembly (120) and at its other end to the frame (18).

2. An in-feed apparatus as claimed in claim 1, wherein the cable (90/91/92/ 93) is a wound metal cable formed of coiled wire strands.

3. An in-feed apparatus as claimed in claim 2, wherein the wire strands are of stainless steel.

4. An in-feed apparatus as claimed in any preceding claim, wherein the cable (90/91/92/93) is of a fixed length and adjustment of the minimum separation between the two feed roller assemblies is achieved by varying the position of the mounting points of the cable on the frame and/or the upper feed roller assembly.

5. An in-feed apparatus as claimed in any preceding claim, wherein metal eyelets are fitted to each end of the cable (90/91/92/93).

6. An in-feed apparatus as claimed in claim 5, wherein the eyelets are be held in place by passing a loop of the cable around the eyelet then crimping the free end of the cable.

7. An in-feed apparatus as claimed in claim 5 or 6, wherein the metal eyelets are fitted to the ends of a loose cable in such a manner that they are coplanar.

8. An in feed apparatus as claimed in any preceding claim wherein two cables (90, 92; 91, 93) are provided on each side of the upper feed roller assembly.

## Patentansprüche

1. Zuführungsvorrichtung für einen Feldhäcksler mit oberen und unteren Zuführungswalzen-Baugruppen (120, 17), die in einem Rahmen befestigt sind,
wobei die obere Zuführungswalzen-Baugruppe (120) beweglich in dem Rahmen (18) befestigt ist, um den Abstand zwischen den beiden Baugruppen zu ändern, und in Richtung auf die untere Zuführungswalzen-Baugruppe (17) vorgespannt ist, um eine Kompressionskraft auf Erntematerial auszuüben, das zwischen den oberen und unteren Zuführungswalzen-Baugruppen hindurchläuft,
wobei die Zuführungsvorrichtung weiterhin einen Anschlag zur Begrenzung der Abwärts-Bewegung der oberen Zuführungswalzen-Baugruppe einschließt, um einen minimalen Abstand zwischen den zwei Zuführungswalzen-Baugruppen einzustellen,
**dadurch gekennzeichnet, dass** der Anschlag ein Kabel (90, 91, 92, 93) umfasst, dass an einem Ende an der oberen Walzen-Baugruppe (120) und an seinem anderen Ende an dem Rahmen (18) befestigt ist.

2. Zuführungsvorrichtung nach Anspruch 1, bei der das Kabel (90/91/92/93) ein gewickeltes Metallkabel ist, das aus gewendelten Drahtlitzen gebildet ist.

3. Zuführungsvorrichtung nach Anspruch 2, bei der die Drahtlitzen aus Edelstahl sind.

4. Zuführungsvorrichtung nach einem der vorhergehenden Ansprüche, bei der das Kabel (90/91/92/93) eine feste Länge aufweist, und die Einstellung des minimalen Abstandes zwischen den zwei Zuführungswalzen-Baugruppen durch Ändern der Position der Befestigungspunkte des Kabels an dem Rahmen und/oder der oberen Zuführungswalzen-Baugruppe erzielt wird.

5. Zuführungsvorrichtung nach einem der vorhergehenden Ansprüche, bei dem Metallösen an jedem Ende des Kabels (90/91/92/93) angebracht sind.

6. Zuführungsvorrichtung nach Anspruch 5, bei der die Ösen dadurch an ihrem Platz gehalten werden, dass eine Schlinge des Kabels um die Öse gelegt wird und dann das freie Ende des Kabels gecrimpt wird.

7. Zuführungsvorrichtung nach Anspruch 5 oder 6, bei der die Metall-Ösen an den Enden eines losen Kabels derart angebracht sind, dass sie komplanar sind.

8. Zuführungsvorrichtung nach einem der vorhergehenden Ansprüche, bei der zwei Kabel (90, 92; 91, 93) auf jeder Seite der oberen Zuführungswalzen-Baugruppe vorgesehen sind.

## Revendications

1. Appareil d'alimentation pour une récolteuse de fourrage comportant des ensembles de rouleau(x) d'alimentation supérieur et inférieur (120, 17) montés dans un châssis,
l'ensemble de rouleau(x) d'alimentation supérieur (120) étant fixé de manière mobile au châssis (18) pour faire varier la séparation entre les deux ensembles et étant contraint vers l'ensemble de rouleau(x) d'alimentation inférieur (17) de façon à appliquer une force de compression au produit récolté passant entre les ensembles de rouleau(x) d'alimentation supérieur et inférieur, et
l'appareil d'alimentation comprenant en plus un dispositif de blocage pour limiter le mouvement vers le bas de l'ensemble de rouleau(x) supérieur de façon à fixer une séparation minimale entre les deux ensembles de rouleau(x) d'alimentation,
**caractérisé en ce que** le dispositif de blocage comprend un câble (90, 91, 92, 93) fixé à une extrémité à l'ensemble de rouleau(x) supérieur (120) et à son autre extrémité au châssis (18).

2. Appareil d'alimentation selon la revendication 1, **caractérisé en ce que** the câble (90/91/92/ 93) est un câble métallique entortillé formé de torons spiralés.

3. Appareil d'alimentation selon la revendication 2, **caractérisé en ce que** les torons sont en acier inoxydable.

4. Appareil d'alimentation selon l'une quelconque des revendications précédentes, **caractérisé en ce que** le câble (90, 91, 92, 93) est d'une longueur fixe et le réglage de la séparation minimale entre les deux ensembles de rouleau(x) d'alimentation est réalisé en faisant varier la position des points de montage du câble sur le châssis et/ou sur l'ensemble de rouleau(x) d'alimentation supérieur.

5. Appareil d'alimentation selon l'une quelconque des revendications précédentes, **caractérisé en ce que** des oeillets métalliques sont montés à chaque extrémité du câble (90/91/92/93).

6. Appareil d'alimentation selon la revendication 5, **caractérisé en ce que** les oeillets sont maintenus en place en passant une boucle de câble autour de l'oeillet, puis en sertissant l'extrémité libre du câble.

7. Appareil d'alimentation selon la revendication 5 ou 6, **caractérisé en ce que** les oeillets métalliques sont montés aux extrémités d'un câble libre de manière à être coplanaires.

8. Appareil d'alimentation selon l'une quelconque des revendications précédentes **caractérisé en ce que** deux câbles (90, 92; 91, 93) sont prévus sur chaque côté de l'ensemble de rouleau(x) d'alimentation supérieur.
